(19) Europäisches Patentamt
European Patent Office
Office européen des brevets

(11) Veröffentlichungsnummer: **0 539 544 B1**

(12) **EUROPÄISCHE PATENTSCHRIFT**

(45) Veröffentlichungstag der Patentschrift: **02.11.94**

(51) Int. Cl.5: **C08L 3/02**, C08L 23/02, C08J 5/18

(21) Anmeldenummer: **92909525.5**

(22) Anmeldetag: **12.05.92**

(86) Internationale Anmeldenummer:
**PCT/CH92/00091**

(87) Internationale Veröffentlichungsnummer:
**WO 92/20740 (26.11.92 92/29)**

Die Akte enthält technische Angaben, die nach dem Eingang der Anmeldung eingereicht wurden und die nicht in dieser Patentschrift enthalten sind.

(54) **POLYMERMISCHUNG FÜR DIE HERSTELLUNG VON FOLIEN.**

(30) Priorität: **18.05.91 DE 4116404**

(43) Veröffentlichungstag der Anmeldung:
**05.05.93 Patentblatt 93/18**

(45) Bekanntmachung des Hinweises auf die Patenterteilung:
**02.11.94 Patentblatt 94/44**

(84) Benannte Vertragsstaaten:
**AT BE CH DE DK ES FR GB GR IT LI LU MC NL SE**

(56) Entgegenhaltungen:
**EP-A- 402 826**
**EP-A- 0 417 828**
**WO-A-90/10671**
**WO-A-90/11326**
**WO-A-91/02025**

(73) Patentinhaber: **Bio-tec Biologische Naturverpackungen GmbH**
**Blinder Weg 4**
**D-46446 Emmerich (DE)**

(72) Erfinder: **Tomka, Ivan, Dr.**
**Chalet Breitfeld**
**CH-1722 Bourguillon (CH)**

(74) Vertreter: **Troesch Scheidegger Werner AG**
**Patentanwälte,**
**Siewerdtstrasse 95,**
**Postfach**
**CH-8050 Zürich (CH)**

EP 0 539 544 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft eine Polymermischung, im wesentlichen bestehend aus einer Stärke, einem Weichmacher, einem Polyolefin, ein Verfahren zur Herstellung einer Polymermischung, eine Verwendung derselben sowie eine Folie und einen Formkörper.

Polymermischungen mit Stärke sind bekannt, wobei die Stärke oder auch andere Biopolymere vorzugsweise aufgrund der biologischen Abbaubarkeit, aufgrund ihres günstigen Preises und aufgrund der Unabhängigkeit von Erdölprodukten verwendet werden.

In diversen Patentschriften wird die Verwendung von Biopolymeren als technischer Kunststoff beschrieben. In der EP-011 82 40, EP-28 24 51, EP-29 89 20, EP-30 44 01, EP-32 65 14, GB-22 14 919 und der EP-32 75 05 wird beschrieben, wie native Stärke, Gelatine oder andere Biopolymere modifiziert resp. destrukturiert werden, um als technische Polymere verwendet werden zu können. Dabei geschieht dies durch Extrusion oder Kneten der Stärke oder des Biopolymeren unter Zuhilfenahme des im Biopolymeren oder der Stärke aufgenommenen Wassers oder durch Zusetzen weiteren Wassers, wobei aber eben der vorhandene, relativ grosse Wassergehalt beispielsweise bei der Extrusion des so destrukturierten Biopolymeres äusserst unerwünscht ist.

Demgegenüber wird in der PCT-WO90-05 161 vorgeschlagen, native Stärke wasserfrei und unter Verwendung von Zuschlagstoffen resp. Weichmachern, wie beispielsweise Glycerin, in ein technisch brauchbares Polymer, d.h. in sogenannte thermoplastisch verarbeitbare Stärke umzuwandeln. Wohl ist die Verarbeitbarkeit und die Wasserresistenz dieses Stärkepolymers wesentlich besser als die gemäss den oben beschriebenen Herstellverfahen erzeugten Stärkepolymeren, jedoch sind die mechanischen Eigenschaften und insbesondere die Wasserresistenz nach wie vor für viele technische Anwendungen, wie insbesondere zur Herstellung von Folien, ungenügend.

Aus diesem Grunde wird in einer Vielzahl von Patentschriften, wie in der EP-040 28 26, EP-040 47 23, EP-40 47 27, EP-40 47 28 und EP-40 73 50, vorgeschlagen, Stärke mit thermoplastischen Kunststoffen, wie Polyolefinen, Polyalkoholen, ABS-Copolymeren, Ethylenacrylsäure-Copolymeren, Copolymeren von Vinylpyrrolidinen, Copolymeren mit Aminogruppen etc., zu mischen resp. sogenannte Polymerblends herzustellen. Dabei ergibt sich allerdings das Problem, dass die Verträglichkeit zwischen Stärke und den weiteren Polymeren ungenügend ist resp. die Phasendurchmischung der einzelnen Polymere schlecht ist.

Dies zeigt sich beispielsweise bei der Herstellung von Folien aus diesen Materialien, wo der in dieser Mischung vorhandene Nichtstärkeanteil an Polymer für sich allein als Folie hergestellt, d.h. mit entsprechend wesentlich dünnerer Wandstärke ausgebildet, bessere Reissfestigkeit aufweist als die entsprechend aus der gesamten Polymermischung hergestellten dickeren Folie.

Gemäss den Patentschriften EP-40 05 31 und EP-40 05 32 wird vorgeschlagen, die Stärke analog der WO90-05 161 mittels eines hochsiedenden Weichmachers, wie Glycerin, Harnstoff oder Sorbitol, zu behandeln, um thermoplastisch verarbeitbare Stärke zu erhalten, um diese anschliessend mit Ethylenacrylsäure und/oder Polyvinylalkohol-Copolymeren zu mischen. Aus diesen Stärke-Polymermischungen hergestellte Folien weisen wohl eine bessere Reissfestigkeit auf, sind aber nach wie vor zu feuchtigkeitsempfindlich.

Dasselbe trifft auf Stärke-Polymermischungen zu, welche gemäss der WO90-14 388 hergestellt werden, wobei hier zu Glycerinstärke Polyethylen und Ethylen-acrylsäure-Copolymere zugemischt werden.

In der EP-A-402 826 wird Stärke als Füllstoff bei der Herstellung eines polaren Ethylen-Copolymeren eingesetzt, wobei Stärkefasern in nicht geschmolzenem Zustand eingearbeitet werden. Stärkefasern werden also im Sinne eines Füllstoffes in einem Bereich ca. 100 °C bis 175 °C in nicht geschmolzenem Zustand dem Ethylen-Copolymeren beigemischt.

Es ist daher eine Aufgabe der vorliegenden Erfindung, eine Polymermischung, im wesentlichen bestehend aus Stärke, insbesondere geeignet für die Herstellung von Folien, vorzuschlagen, welche in Formkörpern und Extrudaten, wie beispielsweise Folien, gute mechanische Eigenschaften ergibt, sowie feuchtigkeitsunempfindlich ist.

Erfindungsgemäss wird dies mittels einer Polymermischung nach Anspruch 1 resp. durch eine Polymermischung, hergestellt gemäss dem Verfahren nach Anspruch 4, gelöst.

Vorgeschlagen wird eine Polymermischung, im wesentlichen bestehend aus Stärke und Polyolefin, die erhalten wird durch im wesentlichen wasserfreies Mischen d.h. durch Mischen bei einem Wassergehalt von höchstens 2,8% von thermoplastisch verarbeitbarer Stärke mit mindestens einem Polyolefin und mindestens einem EthylenAcrylat-Maleinsäureanhydrid-Copolymeren und gegebenenfalls einer Vinyl-Verbindung, welche Anhydrid-Funktion als Substituenten trägt. Für die Definition und die Herstellung von thermoplastisch verarbeitbarer Stärke wird insbesondere auf die WO-90-05 161 hingewiesen.

Die Wirkung des Copolymeren resp. der Vinyl-Verbindung in der erfindungsgemäss vorgeschlagenen Polymermischung liegt darin, dass es als Phasenvermittler zwischen der Stärkephase und der Polyolefinphase wirkt. Das Copolymere umfasst sowohl hydrophobe wie auch hydrophile Teile und durchdringt somit die Phasengrenze zwischen der Stärke und dem Polyolefin.

Die erfindungsgemäss vorgeschlagene Polymermischung wird erhalten durch Mischen von im wesentlichen bis zu 70Gew% thermoplastisch verarbeitbarer Stärke, beinhaltend mindestens einen Weichmacher, mit 10Gew% bis 90Gew% Polyolefin und 1Gew% bis 35Gew% von Ethylen-Acrylat-Maleinsäureanhydrid-Copolymer.

Um insbesondere einerseits gute mechanische Werte, wie Festigkeit, in Formkörpern und Extrudaten, wie Folien, zu erhalten, wie anderseits hohe Feuchtigkeitsunempfindlichkeit zu erreichen, wird erfindungsgemäss vorgeschlagen, 45Gew% bis 70Gew%, vorzugsweise 50Gew% bis 65Gew% an thermoplastisch verarbeitbarer Stärke, beinhaltend mindestens einen Weichmacher aus der Liste von Glycerin, Harnstoff, einem Aminoalkohol, Sorbitol und/oder Bernsteinsäureanhydrid, mit 10Gew% bis 40Gew%, vorzugsweise 20Gew% bis 35Gew% Polyethylen oder Polypropylen, und 10Gew% bis 35Gew%, vorzugsweise 15Gew% bis 25Gew% Ethylen-Acrylat-Maleinsäureanhydrid-Copolymer zu mischen. Sowohl Feuchtigkeitsunempfindlichkeit wie auch hohe Festigkeit werden durch die Anteile an Polyolefin wie auch des Copolymeren beeinflusst, wobei anderseits ein zu hoher Anteil dieser beiden Komponenten in der Mischung insbesondere aus Preisgründen nicht erwünscht ist.

In Folien führt ein zu hoher Anteil dieser Komponenten zudem dazu, dass die Gaspermeabilität ansteigt, währenddem bei hohem Stärkeanteil beispielsweise die Sauerstoffdurchlässigkeit durch derartige Folien gering ist.

Für die Herstellung der vorab erwähnten erfindungsgemässen Polymermischungen wird vorgeschlagen, dass native Stärke und/oder ein Derivat davon mit 15Gew% bis 40Gew% von mindestens einem Weichmacher, wie Glycerin, Harnstoff, einem Aminoalkohol, Sorbitol und/oder Bernsteinsäureanhydrid, im wesentlichen wasserfrei zur Herstellung von thermoplastisch verarbeitbarer Stärke gemischt wird, worauf diese so hergestellte Stärke in der Schmelze in einem Temperaturbereich von 165 °C bis 210 °C mit einem Polyolefin, wie vorzugsweise Polyethylen und/oder Polypropylen, und einem Ethylen-Acrylat-Maleinsäureanhydrid-Copolymeren resp. einer Vinyl-Verbindung, welche Anhydrid-Funktion als Substituenten trägt, gemischt wird.

Bei diesem Mischvorgang werden Maleinsäureanhydrid-Gruppen resp. allgemein die Anydrid-Funktion im Copolymeren durch freie Hydroxylgruppen in der Stärke gemäss nachfolgendem, allgemeinem Reaktionsablauf verestert:

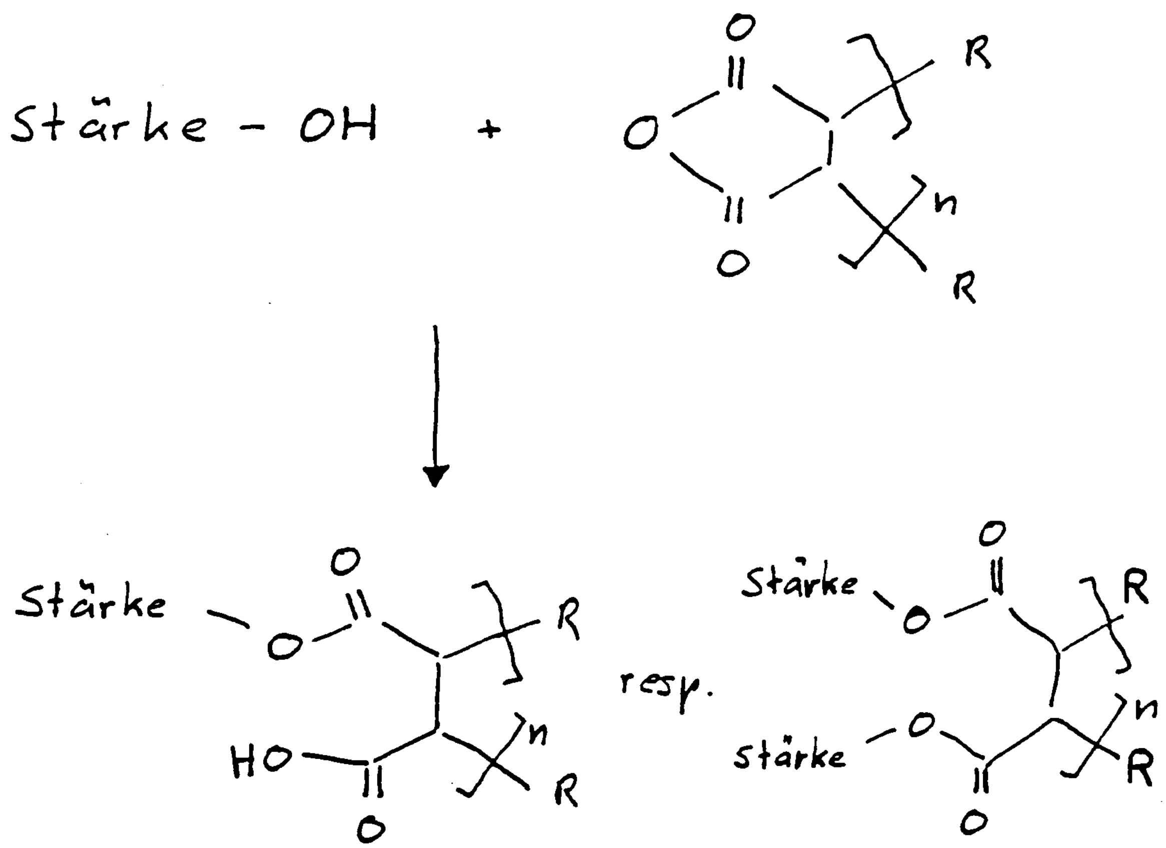


Das Polyolefin, wie z.B. das Polyethylen oder das Polypropylen, bildet eine Art Matrix, in welcher die Stärke eingeschlossen wird. Um aber eine starke Bindung zwischen Polyethylen resp. Polypropylen und der Stärke resp. den beiden Phasen zu erzeugen, dient, wie vorab erwähnt, das Copolymere resp. die Vinyl-Verbindung, so dass entsprechend bei aus der Polymermischung hergestellten Formkörpern resp. Folien gute mechanische Werte, wie Festigkeit, erzielt werden.

Diese Bindung an der Phasengrenze wird, wie erwähnt, unter Zuhilfenahme des Copolymeren erreicht, wobei hierzu insbesondere die vorab erwähnte Veresterungsreaktion verantwortlich ist. Im Infrarotspektrum kann nachgewiesen werden, dass die erwähnte Reaktion beim Mischen zwischen der Starke und dem Copolymeren abläuft. Auf diesen Nachweis im Infrarotspektrum wird später eingegangen.

Bevorzugte Ausführungsvarianten des erfindungsgemässen Verfahrens, wie insbesondere auch die Herstellung von thermoplastisch verarbeitbarer Stärke und des Ethylen-Acrylat-Maleinsäureanhydrid-Copolymeren, sind gemäss dem Wortlaut nach einem der Ansprüche 5 bis 8 charakterisiert.

Dabei ist noch einmal darauf hinzuweisen, dass insbesondere für die Herstellung von thermoplastisch verarbeitbarer Stärke auf die WO90-05 161 verwiesen wird.

Die erfindungsgemäss hergestellten Polymermischungen eignen sich insbesondere für die Herstellung von Ein- oder Mehrschichtfolien. Dabei kann die Herstellung der Folie direkt anschliessend an die Herstellung der Polymermischung erfolgen, indem die Polymermischungschmelze mittels einer Breitschlitzdüse oder einem Blaskopf extrudiert wird. Es ist aber auch möglich, zunächst die Polymermischung zu granulieren und das Granulat später zu einer Folie zu verarbeiten.

Insbesondere ist es auch möglich, die erfindungsgemässe Polymermischung zusammen mit anderen Polymeren zu Mehrschichtfolien zu koextrudieren, wobei beispielsweise eine derartige Dreischichtfolie je als äussere Schicht eine Schicht, hergestellt aus der erfindungsgemässen Polymermischung, beinhalten kann, währenddem die mittige Schicht aus im wesentlichen thermoplastisch verarbeitbarer Stärke hergestellt wird.

Auch ist es möglich, die erfindungsgemässe Polymermischung vor deren Extrusion zu einer Folie mit einem Treibmittel, wie beispielsweise Natriumkarbonat oder einer organischen Säure, zu versetzen, wobei es sich bei der organischen Säure beispielsweise um Zitronensäure handeln kann.

Selbstverständlich ist es auch möglich, aus den erfindungsgemäss vorgeschlagenen Polymermischungen Formkörper oder Extrudate, wie Schläuche, herzustellen, die Zusammensetzung der Polymermischung richtet sich dabei innerhalb der erfindungsgemäss vorgeschlagenen Grenzen nach dem Anforderungsprofil

des herzustellenden Produktes.

Die Erfindung wird nun beispielsweise anhand der nachfolgenden Ausführungsbeispiele und unter Bezug auf die beigefügten Figuren näher erläutert.

Dabei zeigen:

- Fig.1 Infrarotspektren der Polymermischung am Anfang und am Schluss des Mischvorganges,
- Fig. 2 ein Wärmeflussdiagramm von nativer Stärke mit Glycerin,
- Fig. 3 das Wärmeflussdiagramm von thermoplastisch verarbeitbarer Stärke,
- Fig. 4 das Wärmeflussdiagramm bei Verwendung von thermoplastisch verarbeitbarer Stärke, gemischt mit einem Ethylen-Acrylat-Maleinsäureanhydrid-Copolymeren, und
- Fig. 5 das Wärmeflussdiagramm bei Verwendung von nativer Stärke und Glycerin, gemischt mit einem Ethylen-Acrylat-Maleinsäureanhydrid-Copolymeren.

1. Herstellung der thermoplastisch verarbeitbaren Stärke

Ausgegangen wird von getrockneter, nativer Stärke, wobei deren Wassergehalt vorzugsweise weniger als 1Gew% beträgt. Die native Stärke wird mit einem geeigneten Weichmacher, wie beispielsweise mit Glycerin, aufgeschlossen, wobei vorzugsweise zwischen 25Gew% und 35Gew%, bezogen auf die Gesamtmischung, an Glycerin zugemischt wird. Die Stärke/Glycerinmischung wird anschliessend in einem Extruder in einem Temperaturbereich von 160 °C bis 190 °C, vorzugsweise bei hoher Scherung, stark durchmischt, wobei dieses Durchmischen selbstverständlich auch in einem Kneter erfolgen kann.

Als Weichmacher eignen sich selbstverständlich auch andere Materialien, wie Harnstoff, Sorbitol, Bernsteinsäureanhydrid, Aminoalkohole usw., wobei an dieser Stelle erneut auf die WO90-05 161 hinzuweisen wäre, in welcher eine Reihe weiterer geeigneter Weichmacher resp. Zuschlagstoffe definiert sind.

Die Weiterverarbeitung der so hergestellten thermoplastisch verarbeitbaren Stärke kann direkt in demselben Extruder erfolgen, oder aber die Stärke kann zunächst granuliert werden.

2. Ethylen-Acrylat-Maleinsäureanhydrid-Copolymer

Auf die Herstellung dieser Copolymere soll an dieser Stelle nicht weiter eingegangen werden, handelt es sich doch dabei um gängige Handelsprodukte, und zudem ist dies nicht Bestandteil der vorliegenden Erfindung.

Bei den für diese Erfindung geeigneten Copolymeren handelt es sich um solche, welche vorzugsweise die nachfolgende Zusammensetzung aufweisen:

Gewichtsanteile

| | |
|---|---|
| Ethylen: | 80-95Gew% |
| Acrylsäuremethylester: / Acrylsäureethylester: | 5-15Gew% |
| Maleinsäureanhydrid: | 0,2- 1Gew% |

Im nachfolgenden Beispiel einer erfindungsgemäss hergestellten Polymermischung wurde ein Copolymeres mit den folgenden Gewichtsanteilen verwendet:

| | |
|---|---|
| Ethylen: | 88,0Gew% |
| Acrylsäuremethylester: | 9,0Gew% |
| Acrylsäureethylester: | 2,5Gew% |
| Maleinsäureanhydrid: | 0,5Gew% |

3. Herstellung der Stärke-ethylen-Copolymer-Mischung

Nach der Herstellung der thermoplastisch verarbeitbaren Stärke gemäss Punkt 1) wurden in demselben Extruder am Anfang einer zweiten Mischzone bei einer am Extruder eingestellten Temperatur von 170°C eine homogene Mischung von Polyethylen und dem Copolymeren gemäss Punkt 2) der Stärkeschmelze zugegeben. Die Massetemperatur der Schmelze betrug an dieser Stelle ca. 190°C bis 200°C. Die Stärke, Polyethylen, Copolymermischung wurde anschliessend in dieser zweiten Mischzone unter starker Scherung gemischt, wobei diese durch Knetblöcke und Rückstauelemente erzeugt wurde. Vorzugsweise wird für das Mischen ein Co-Kneter oder ein Zweiwellenextruder verwendet. Die insgesamt eingebrachte totale mechanische Energie betrug in etwa 0,4kWh/kg.

Die Mengen zugesetzten Polyethylens und des Copolymeren sind in der nachfolgenden Tabelle zusammengefasst, wobei die Abkürzung TPS = thermoplastisch verarbeitbare Stärke, die Abkürzung P für Anteil Copolymer und K für Anteil Polyethylen steht.

Als Polyethylen wurde im übrigen ein high density Polyethylen der Firma BASF verwendet. Ebenfalls in der Tabelle angeführt ist der Weichmachergehalt resp. der Gehalt an Glycerin in der verwendeten thermoplastisch verarbeitbaren Stärke.

Mit den erfindungsgemäss hergestellten Polymermischungen, welche in der nachfolgenden Tabelle angeführt sind, wurden Folien hergestellt, die auf Zugbeanspruchung und Dehnung überprüft wurden. Die entsprechend ermittelten Messwerte sind ebenfalls in der nachfolgenden Tabelle angeführt.

Erfindungsgemäss hergestellte Stärke-Polyethylen-Copolymer-Mischungen

| Wassergehalt | Weichmacher (Gew%) | TPS/P/K | Zugfestigkeit (MPa) | Festigkeit bei Fliessgrenze | Dehnung % |
|---|---|---|---|---|---|
| 2.8 | 18.6 | 50:20:30 | 18.2 | - | 95.0 |
| 0.5 | 25.7 | 50:10:40 | 15.9 | - | 43.0 |
| 0.5 | 25.7 | 50:25:25 | 12.2 | - | 168.0 |
| 0.5 | 25.7 | 65:21:14 | 12.0 | - | 75.0 |
| 0.5 | 25.7 | 50:15:35 | 16.6 | - | 59.0 |
| 0.5 | 25.7 | 55:32:13 | 16.2 | - | 53.0 |
| 0.8 | 19.1 | 55:13:32 | 17.5 | - | 30.0 |
| 0.8 | 17.3 | 50:15:35 | 16.7 | - | 26.5 |
| 0.8 | 17.3 | 60:12:28 | 15.7 | - | 14.0 |
| 0.5 | 12.0 | 50:15:35 | 20.5 | 21.0 | 290 |
| | | | | (Längsrichtung) | |
| 0.5 | 12.0 | 50:15:35 | 20.5 | 21.0 | 290 |
| | | | | (Querrichtung) | |

In bezug auf die Zugfestigkeit zeigt sich, dass das gewählte Mischverhältnis zwischen den einzelnen Komponenten nur einen relativ schwachen Einfluss ausübt. Demgegenüber aber zeigt es sich, dass bei der Dehnung die Anteile Polyethylen und Copolymeres einen grossen Einfluss ausüben, indem sowohl ein relativ kleiner Anteil an Polyethylen oder aber ein kleiner Anteil Copolymeres zu einer relativ schwachen Dehnung in der Folie führen.

4. Veresterungsreaktion

Beim Durchführen des Mischvorganges zwischen der thermoplastisch verarbeitbaren Stärke, dem Polyethylen und dem Ethylen-Acrylat-Maleinsäureanrydrid-Copolymeren im Extruder erfolgt eine Veresterungsreaktion der Maleinsäureanhydrid-Gruppen im Copolymeren mit Hydroxyl-Gruppen der Stärke. Eine derartige Veresterungsreaktion ist im übrigen auch möglich zwischen Maleinsäureanhydrid-Gruppen mit dem Glycerin, das der Stärke als Weichmacher zugesetzt worden ist; diese Reaktion ist jedoch relativ unwesentlich.

Für den Nachweis dieser Reaktion wurden von der Polymermischung am Anfang und am Schluss der Mischstrecke im Extruder Proben entnommen und entsprechende Infrarotspektren erstellt, welche in Fig. 1

dargestellt sind. Dabei zeigt sich in Fig. 1, dass infrarotaktive Molekülschwingungen von Anhydrid-Gruppen an der Stelle $1780cm^{-1}$ auftreten. Demgegenüber sind infrarotaktive Molekülschwingungen von Ester-Gruppen bei $1740cm^{-1}$ sichtbar.

Kurve 1 zeigt das Infrarotspektrum am Anfang des Mischvorganges und Kurve 2 das Infrarotspektrum nach dem Ende des Mischvorganges.

Es hat sich im übrigen aus Infrarotspektren von Proben entlang der Mischstrecke ergeben, dass die Intensität der "Peaks" der Anhydrid-Gruppen mit fortschreitender Mischdauer abnimmt, währenddem die Intensität der Esterschwingungen zunimmt.

Die Fig. 2 und 3 zeigen Wärmeflussdiagramme von nativer Stärke und Glycerin resp. von thermoplastisch verarbeitbarer Stärke.

In den Fig. 4 und 5 wurde die Veresterungsreaktion in einem Wärmeflusskalorimeter erfasst, wobei die Heizrate 10°/min betrug. Dabei zeigt sich der Ablauf einer exothermen Reaktion in einem Bereich von 165°C bis 207°C, wobei ein maximaler Peak bei 190°C sichtbar ist. Dabei wird in Fig. 4 von thermoplastisch verarbeitbarer Stärke ausgegangen unter Zugabe eines Ethylen-Acrylat-Maleinsäureanhydrid-Copolymeren und in Fig. 5 von nativer Stärke und Glycerin.

Die vorab erfindungsgemäss definierten Polymermischungen, bestehend aus thermoplastisch verarbeitbarer Stärke, einem Polyolefin, wie beispielsweise das erwähnte Polyethylen, sowie dem Ethylen-Acrylat-Maleinsäureanhydrid-Copolymeren eignen sich für die Herstellung irgendeines Formkörpers oder eines Extrudates. Speziell geeignet sind die erfindungsgemäss definierten Polymermischungen für die Herstellung von Folien, wobei dies eine Einschichtfolie sein kann, wie aber auch eine Mehrschichtfolie, wobei für deren Herstellung die erfindungsgemäss definierte Polymermischung zusammen mit thermoplastisch verarbeitbarer Stärke koextrudiert werden kann.

Im weiteren ist zu erwähnen, dass anstelle des Ethylen-Acrylat-Maleinsäureanhydrid-Copolymeren x-beliebige Vinyl-Verbindungen verwendet werden können, welche Anhydrid-Funktion als Substituenten tragen.

**Patentansprüche**

1. Polymermischung, im wesentlichen bestehend aus einer Stärke, einem Weichmacher, einem Polyolefin, einem/er als Phasenvermittler zwischen der Stärkephase und der Polyolefinphase wirkenden Ethylen-Acrylat-Maleinsäureanhydrid-Copolymer und/oder anhydridfunktiontragenden Vinylverbindung, sowie aus dem Veresterungsprodukt Stärke-Maleinsäureester-Maleinsäureanhydrid-Ethylen-Acrylat-Copolymeren, erhältlich durch Mischen von bis zu 70Gew% einer thermoplastisch verarbeitbaren Stärke, die mindestens einen Weichmacher enthält, mit 10Gew% bis 90Gew% von einem Polyolefin und 1Gew% bis 35Gew% von einem Ethylen-Acrylat-Maleinsäureanhydrid-Copolymeren und gegebenenfalls einer anhydridfunktiontragenden Vinylverbindung, bei einem Wassergehalt von höchstens 2,8%.

2. Polymermischung nach Anspruch 1, erhältlich durch Mischen von 45Gew% bis 70Gew% thermoplastisch verarbeitbarer Stärke, beinhaltend mindestens einen Weichmacher aus der Liste von Glycerin, Harnstoff, einem Aminoalkohol, Sorbitol und/oder Bersteinsäureanhydrid; 10Gew% bis 40Gew% Polyethylen oder Polypropylen und 10Gew% bis 35Gew% Ethylen-Acrylat-Maleinsäureanhydrid-Copolymer.

3. Polymermischung nach Anspruch 2, erhältlich durch Mischen von 50Gew% bis 65Gew% thermoplastisch verarbeitbarer Stärke, 20Gew% bis 35Gew% Polyethylen oder Polypropylen und 15Gew% bis 25Gew% Ethylen-Acrylat-Maleinsäureanhydrid-Copolymer.

4. Verfahren zur Herstellung einer Polymermischung, beinhaltend Stärke und ein Polyolefin nach einem der Ansprüche 1 bis 3, dadurch gekennzeichnet, dass native Stärke mit 15Gew% bis 40Gew% von mindestens einem Weichmacher zur Herstellung von thermoplastisch verarbeitbarer Stärke bei einem Wassergehalt von < 1% gemischt wird, worauf bis zu 70Gew% davon in der Schmelze in einem Temperaturbereich von 165°C bis 210°C mit 10Gew% bis 90Gew% von einem Polyolefin und 1Gew% bis 35Gew% von einem Ethylen-Acrylat-Maleinsäureanhydrid-Copolymeren und gegebenenfalls einer anhydridfunktiontragenden Vinylverbindung und einem Wassergehalt von insgesamt höchstens 2,8% gemischt werden, wobei Maleinsäureanhydrid-Gruppen im Copolymeren durch freie Hydroxylgruppen in der Stärke gemäss der nachfolgenden allgemeinen Reaktion verestert werden:

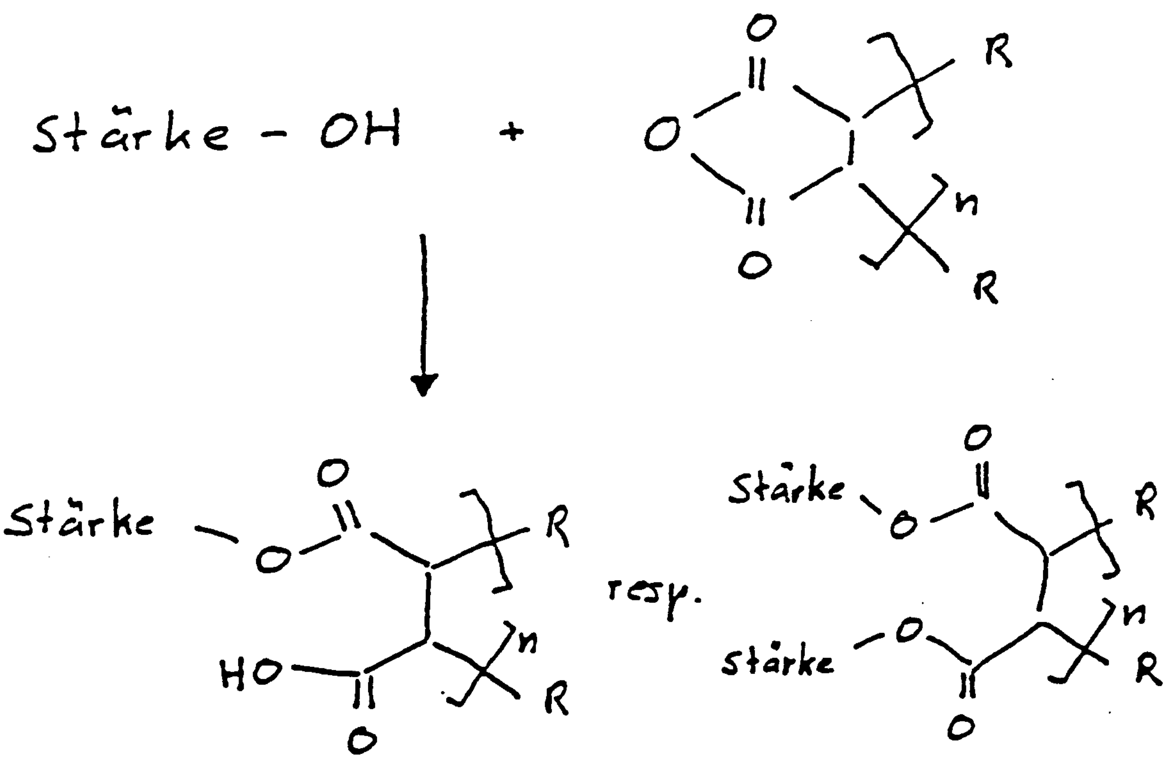


5. Verfahren nach Anspruch 4, dadurch gekennzeichnet, dass als Weichmacher Glycerin, Harnstoff, ein Aminoalkohol, Sorbitol und/oder Bernsteinsäureanhydrid verwendet werden.

6. Verfahren nach Anspruch 4 oder 5, dadurch gekennzeichnet, dass bis zu 70Gew% thermoplastisch verarbeitbarer Stärke in einem Extruder oder Kneter mit 10Gew% bis 40Gew% Polyethylen und/oder Polypropylen und 10Gew% bis 35Gew% von Ethylen-Acrylat-Maleinsäureanhydrid-Copolymer gemischt werden, wobei am Extruder oder Kneter Verarbeitungsparameter bzw. Betriebsbedingungen eingestellt werden, dass die beim Mischvorgang totale eingebrachte mechanische Energie etwa 0,4kWh/kg beträgt und wobei ein Extruder oder Kneter derjenigen Art verwendet wird, in welchem Knetblöcke und Rückstauelemente vorgesehen sind, um eine gute Durchmischung der Schmelze zu erreichen.

7. Verfahren nach einem der Ansprüche 4 bis 6, dadurch gekennzeichnet, dass native Stärke mit einem Wassergehalt von weniger als 1% mit dem Weichmacher in einem Temperaturbereich von 160 °C bis 190 °C in einem Extruder oder Kneter unter Scherung homogenisiert wird, worauf in einem weiteren Extrusionsschritt oder im selben Extruder in einer anschliessenden Zone das Mischen mit Polyethylen und/oder Polypropylen und dem Copolymeren erfolgt.

8. Verfahren nach einem der Ansprüche 4 bis 6, dadurch gekennzeichnet, dass die native Stärke mit dem Weichmacher bei Raumtemperatur oder erhöhter Temperatur vorgemischt wird, worauf die Stärke quillt und ein trockenes Granulat bildet, das anschliessend für die Weiterverarbeitung und das Mischen mit Polyethylen und/oder Polypropylen sowie dem Copolymeren verwendet wird.

9. Verfahren nach einem der Ansprüche 4 bis 8, dadurch gekennzeichnet, dass ein Ethylen-Acrylat-Maleinsäureanhydrid-Copolymer verwendet wird, welches durch Verarbeiten von 80Gew% bis 95Gew% Ethylen, 1Gew% bis 15Gew% Acrylsäure-methyl-ester und/oder Acrylsäure-ethyl-ester sowie 0,1Gew% bis 15Gew% Maleinsäureanhydrid erhalten sind.

10. Verwendung einer Polymermischung nach einem der Ansprüche 1 bis 3 zur Herstellung von mindestens einer Schicht von einer Ein- oder Mehrschichtfolie, dadurch gekennzeichnet, dass die Polymermischung mittels Breitschlitzextrusion oder Blasextrusion resp. Koextrusion zu einer Folie verarbeitet wird.

11. Verwendung nach Anspruch 10, dadurch gekennzeichnet, dass die Mischung mit reiner thermoplastisch verarbeitbarer Stärke, umfassend einen Weichmacher, zu einer Zwei- oder Mehrschichtfolie koextrudiert wird.

12. Verwendung einer Polymermischung nach einem der Ansprüche 1 bis 3 zur Herstellung einer schaumartigen Folie, dadurch gekennzeichnet, dass der Polymermischung vor der Extrusion ein Treibmittel zugegeben wird.

13. Verwendung nach Anspruch 12, dadurch gekennzeichnet, dass als Treibmittel Natriumkarbonat oder eine organische Säure, vorzugsweise Zitronensäure verwendet wird.

14. Folie mit mindestens einer Schicht, bestehend im wesentlichen aus einer Polymermischung nach einem der Ansprüche 1 bis 3.

15. Formkörper oder Extrudat, im wesentlichen bestehend aus einer Polymermischung nach einem der Ansprüche 1 bis 3.

**Claims**

1. Polymer compound essentially comprising a starch, a softener, a polyolefin, an ethylene-acrylate-monoacid-anhydride-copolymer and/or a vinyl bond, having the function of an anhydride, functioning as a phase agent between a starch phase and polyolefin phase, and also starch-monoacid-ester-monoacid-anhydride-ethylene-acrylate-copolymers from an esterification product, obtainable by mixing up to 70% of overall weight of a thermoplastically workable starch, which at least contains a softener, with 10 to 90% of overall weight polyolefin and 1 to 35% of overall total weight ethylene-acrylate-monoacid-anhydride-copolymers and a vinyl bond, functioning as an anhydride, with a water content of, if necessary, a maximum of 2.8%.

2. Polymer compound in accordance with claim 1, obtainable by combining 45 to 70% of overall weight thermoplastically workable starch containing at least one softener from the range, glycerine, urea, an amino-alcohol, sorbitol and/or succinic acid anhydride, 10 to 40% of overall weight polyethylene or polypropylene and 10 to 35% ethylene-acrylate-monoacid-anhydride-copolymer.

3. Polymer combination in accordance with claim 2, obtainable by mixing 50 to 65% of overall weight thermoplastically workable starch, 20 to 35% polyethylene or polypropylene and 15 to 25% of overall weight ethylene-acrylate-monoacid-anhydride-copolymer.

4. Process for producing a polymer combination containing starch and a polyolefin in accordance with any one of claims 1 to 3, wherein native starch is mixed with at least one softener amounting to 15 to 40% of overall weight, to produce thermoplastically workable starch with a water content of $< 1\%$, whereupon up to 70% of overall weight of this is mixed in a melt, at a temperature of 165 to 210 °C, with 10 to 90% overall weight polyolefin and 1 to 35% of overall weight ethylene-acrylate-monoacid-anhydride-copolymers and, where applicable, a vinyl bond, having an anhydride function, and a water content totalling a maximum 2.8%, whereby monoacid groups are estered in copolymers concerned by means of free hydroxyl groups in a said starch in accordance with a following general reaction:

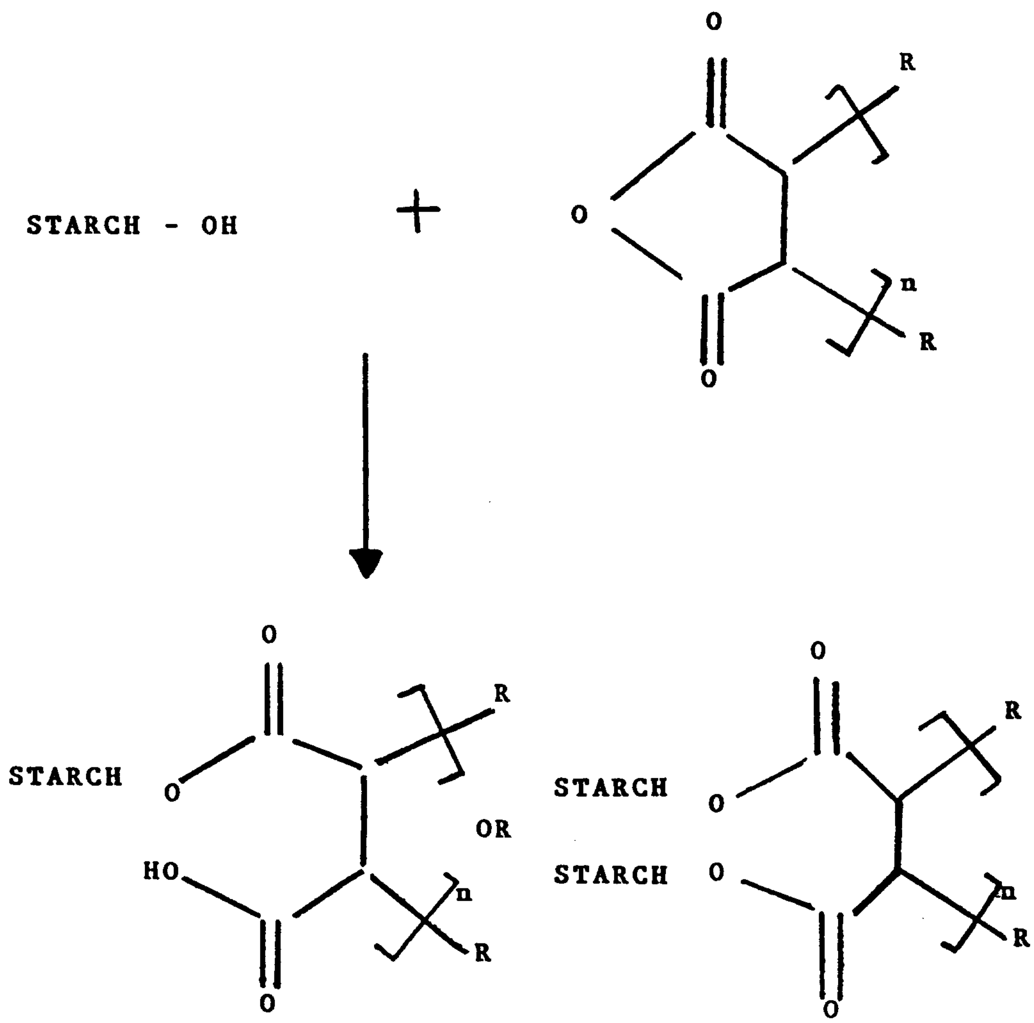

OR

5. Process in accordance with claim 4, wherein glycerine, urea, an amino-alcohol, sorbitol and/or succinic acid anhydride are used as softeners.

6. Process in accordance with claim 4 or claim 5, wherein thermoplastically workable starch accounting for 70% of overall weight is mixed in an extruder or kneader with 10 to 40% overall weight polyethylene and/or polypropylene and 10 to 35% overall weight ethylene-acrylate-monoacid-anhydride-copolymer, whereby processing or operating conditions are used concerning an extruder or kneader such that total input of mechanical energy for a mixing process amounts to 0.4 kWh/kg and whereby an extruder or kneader of a type in which kneading blocks and backwash elements are provided in order to obtain thorough mixing of a melt concerned, is used.

7. Process in accordance with any one of claims 4 to 6, wherein native starch with a water content of less than 1% is homogenized with a softener at a temperature of from 160 to 190°C in an extruder or kneader with shearing, whereupon mixing with polyethylene and/or polypropylene and copolymers occurs, in a further extrusion stage or in the same, in an ensuing zone.

8. Process in accordance with any one of claims 4 to 6, wherein native starch is initially mixed with a softener at room temperature or raised temperature, whereupon the said starch quills and forms dry granulated material which is then used for further processing and for mixing with polyethylene and/or polypropylene and co-polymers concerned.

9. Process in accordance with any one of claims 4 to 8, wherein an ethylene-acrylate-monoacid-anhydride-copolymer is used which is obtained by processing 80 to 90% of overall weight ethylene, 1

to 15% of overall weight methyl acrylate and/or ethyl acrylate and 0.1 to 15% monoacid anhydride.

**10.** Use of a polymer mixture in accordance with any one of claims 1 to 3 for producing at least a layer of a single or multi-layered sheet, wherein a said polymer mixture is processed by means of fishtail extrusion of blast extrusion or co-extrusion to form a sheet.

**11.** Use in accordance with claim 10, wherein a mixture with pure thermoplastically workable starch including a softener, is extruded into a double- or multi-layered sheet.

**12.** Use of a polymer mixture in accordance with any one of claims 1 to 3 to produce a foam-like sheet, wherein a polymer mixture has a propellant added to it before extrusion.

**13.** Use in accordance with claim 12, wherein sodium carbonate or an organic acid, preferably acetic acid is used as a propellant.

**14.** Sheet with at least one layer comprising essentially a polymer mixture in accordance with any one of claims 1 to 3.

**15.** Form of extruded material essentially comprising a polymer mixture in accordance with any one of claims 1 to 3.

**Revendications**

**1.** Mélange de polymères, constitué essentiellement d'un amidon, d'un plastifiant, d'une polyoléfine, d'un copolymère éthylène-acrylate-anhydride maléique et/ou composé vinylique portant des fonctions anhydride, servant d'intermédiaire de phase entre la phase amidon et la phase polyoléfine, ainsi que du produit d'estérification qu'est le copolymère amidon-ester de l'acide maléique-anhydride maléique-éthylène-acrylate, que l'on peut obtenir en mélangeant jusqu'à 70 % en poids d'un amidon pouvant subir une transformation thermoplastique, qui contient au moins un plastifiant, avec 10 à 90 % en poids d'une polyoléfine et 1 à 35 % en poids d'un copolymère éthylène-acrylate-anhydride maléique et éventuellement d'un composé vinylique portant des fonctions anhydride, pour une teneur en eau pouvant éventuellement être au plus de 2,8 %.

**2.** Mélange de polymères selon la revendication 1, que l'on peut obtenir en mélangeant de 45 à 70 % en poids d'un amidon pouvant subir une transformation thermoplastique, contenant au moins un plastifiant choisi parmi l'ensemble comprenant le glycérol, l'urée, un aminoalcool, du sorbitol et/ou de l'anhydride succinique ; de 10 à 40 % en poids de polyéthylène ou de polypropylène, et de 10 à 35 % en poids d'un copolymère éthylène-acrylate-anhydride maléique.

**3.** Mélange de polymères selon la revendication 2, que l'on peut obtenir en mélangeant de 50 à 65 % en poids d'amidon pouvant subir une transformation thermoplastique de 20 à 35 % en poids de polyéthylène ou de polypropylène, et de 15 à 25 % en poids d'un copolymère éthylène-acrylate-anhydride maléique.

**4.** Procédé pour préparer un mélange de polymères, contenant de l'amidon et une polyoléfine selon l'une des revendications 1 à 3, caractérisé en ce qu'on mélange de l'amidon natif avec une quantité de 15 à 40 % en poids, d'au moins un plastifiant, pour préparer un amidon pouvant subir une transformation thermoplastique, pour une teneur en eau inférieure à 1 %, puis on mélange jusqu'à 70 % de ce dernier, à l'état fondu, dans un intervalle de température de 165 à 210 °C, avec 10 à 90 % en poids d'une polyoléfine et 1 à 35 % en poids d'un copolymère éthylène-acrylate-anhydride maléique et éventuellement d'un composé vinylique portant des fonctions anhydride, avec une teneur en eau totale au plus égale à 2,8 %, ce par quoi des groupes anhydride maléique se trouvant dans le copolymère sont estérifiés par des groupes hydroxyle libres se trouvant dans l'amidon, selon la réaction générale suivante.

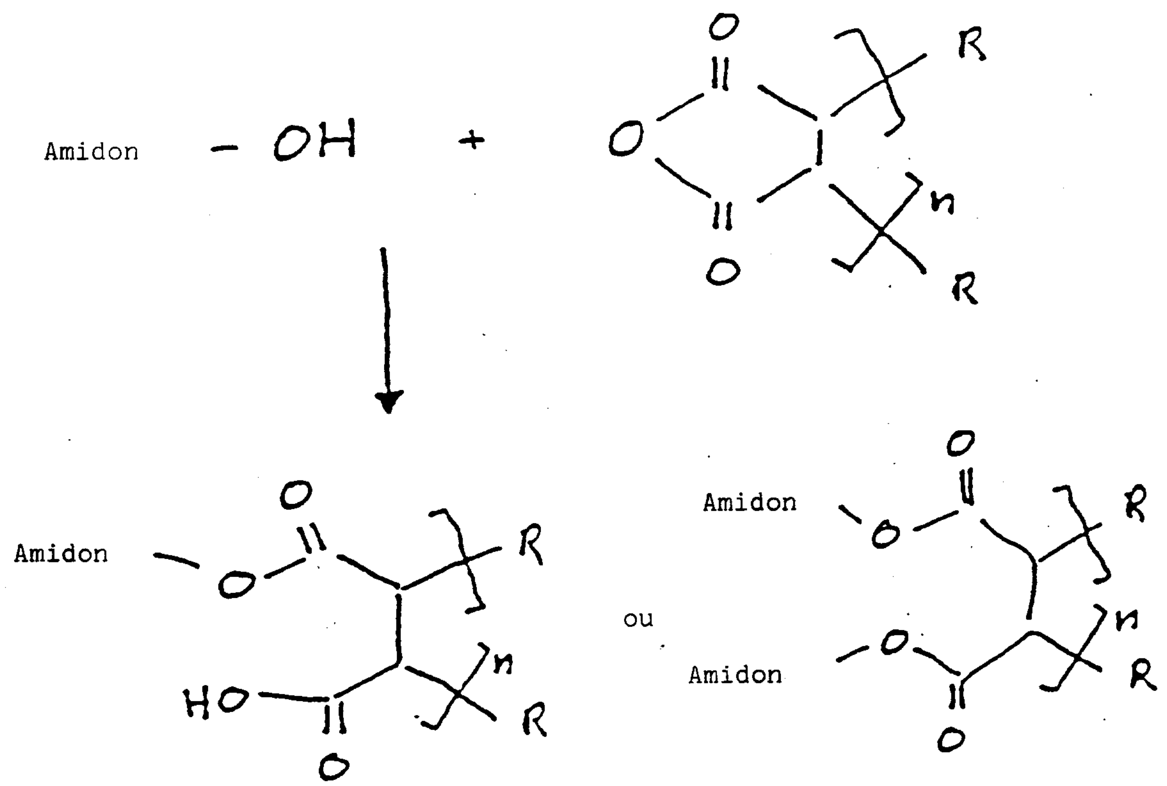

ou

5. Procédé selon la revendication 4, caractérisé en ce qu'on utilise comme plastifiant du glycérol, de l'urée, un aminoalcool, du sorbitol et/ou de l'anhydride succinique.

6. Procédé selon la revendication 4 ou 5, caractérisé en ce qu'on mélange dans une extrudeuse ou un malaxeur jusqu'à 70 % en poids d'un amidon pouvant subir une transformation thermoplastique, avec 10 à 40 % en poids de polyéthylène et/ou de polypropylène et 10 à 35 % en poids d'un copolymère éthylène-acrylate-anhydride maléique, les paramètres de mise en oeuvre ou les conditions de marche étant ajustées au niveau de l'extrudeuse ou du malaxeur de façon que l'énergie mécanique totale fournie lors de l'opération de mélange soit d'environ 0,4 kWh/kg, et utilisation étant faite d'une extrudeuse ou d'un malaxeur d'un type dans lequel sont prévus des blocs de malaxage et des éléments de retenue, pour parvenir à un bon mélange intime de la masse fondue.

7. Procédé selon l'une des revendications 4 à 6, caractérisé en ce que, dans une extrudeuse ou un malaxeur, on homogénéise sous cisaillement de l'amidon natif ayant une teneur en eau inférieure à 1 %, avec le plastifiant et dans une plage de température de 160 à 190 °C, après quoi, lors d'une étape ultérieure d'extrusion, ou dans la même extrudeuse mais dans une zone contiguë, on procède au mélange avec du polyéthylène et/ou polypropylène, et le copolymère.

8. Procédé selon l'une des revendications 4 à 6, caractérisé en ce qu'on procède au mélange préalable de l'amidon natif avec le plastifiant à la température ambiante ou à température élevée, ce par quoi l'amidon gonfle et forme un granulé sec, lequel est ensuite utilisé pour le traitement ultérieur et le mélange avec du polyéthylène et/ou polypropylène, ainsi que le copolymère.

9. Procédé selon l'une des revendications 4 à 8, caractérisé en ce qu'on utilise un copolymère éthylène-acrylate-anhydride maléique, que l'on obtient par mise en oeuvre de 80 à 95 % en poids d'éthylène, de 1 à 15 % en poids d'acrylate de méthyle et/ou d'acrylate d'éthyle et de 0,1 à 15 % en poids d'anhydride maléique.

10. Utilisation d'un mélange de polymères selon l'une des revendications 1 à 3, pour fabriquer au moins une couche d'une feuille à une ou plusieurs couches, caractérisée en ce que le mélange de polymères est traité par extrusion à l'aide d'une filière plate ou extrusion soufflage ou coextrusion, pour donner

une feuille.

**11.** Utilisation selon la revendication 10, caractérisée en ce que le mélange est coextrudé avec un amidon pur, pouvant subir une transformation thermoplastique, et comprenant un plastifiant, en une feuille à deux couches ou plusieurs couches.

**12.** Utilisation d'un mélange de polymères selon l'une des revendications 1 à 3, pour fabriquer une feuille de type mousse, caractérisée en ce que le mélange de polymères est, avant extrusion, additionné d'un agent porogène.

**13.** Utilisation selon la revendication 12, caractérisée en ce qu'on utilise comme agent porogène de carbonate de sodium ou un acide organique, de préférence l'acide citrique.

**14.** Feuille ayant au moins une couche, constituée pour l'essentiel d'un mélange de polymères selon l'une des revendications 1 à 3.

**15.** Corps moulé ou produit d'extrusion, constitué pour l'essentiel d'un mélange de polymères selon l'une des revendications 1 à 3.

Figur 1

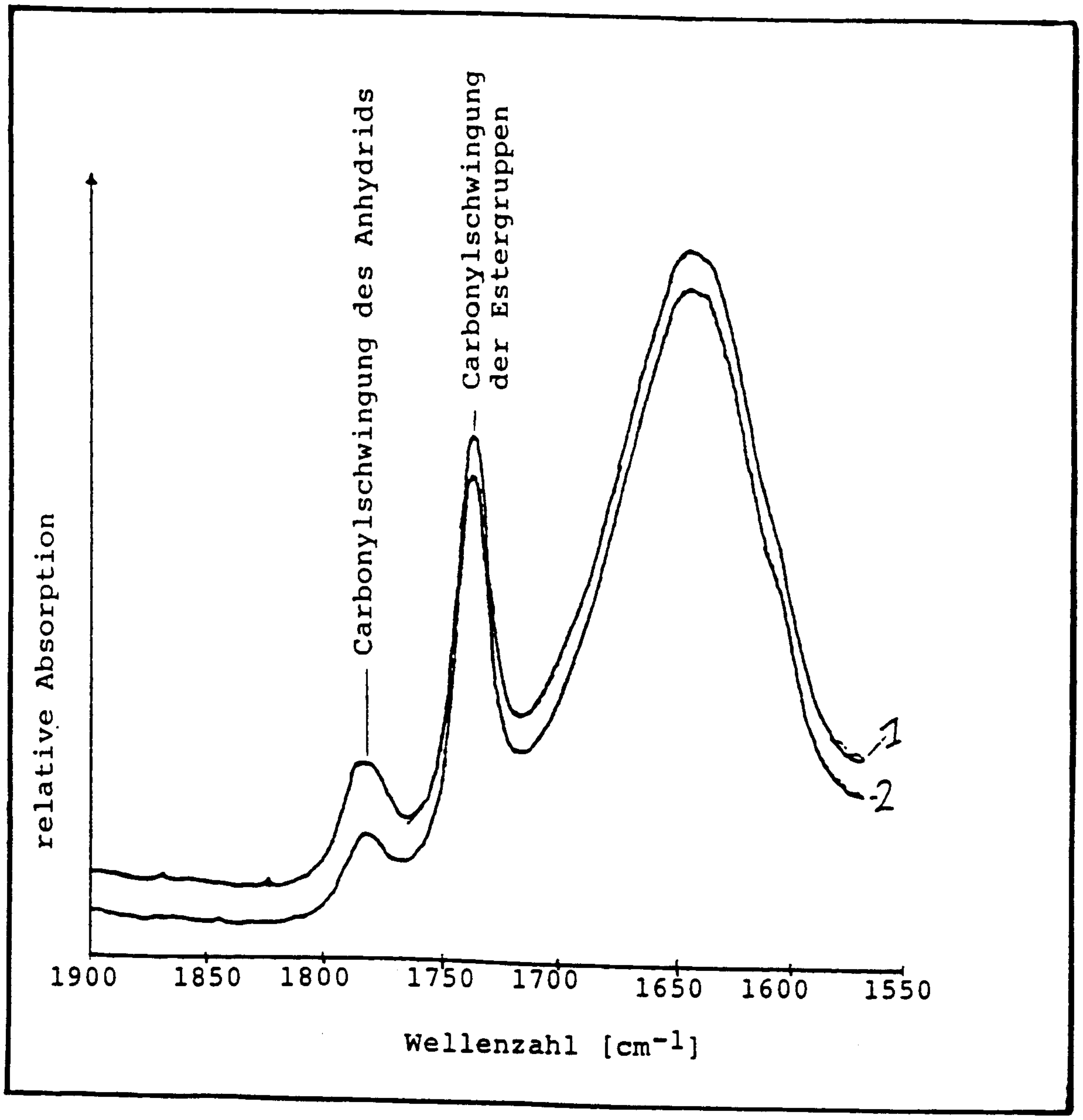
relative Absorption
Carbonylschwingung des Anhydrids
Carbonylschwingung der Estergruppen
1
2
1900
1850
1800
1750
1700
1650
1600
1550
Wellenzahl [cm-1]

Figur 2

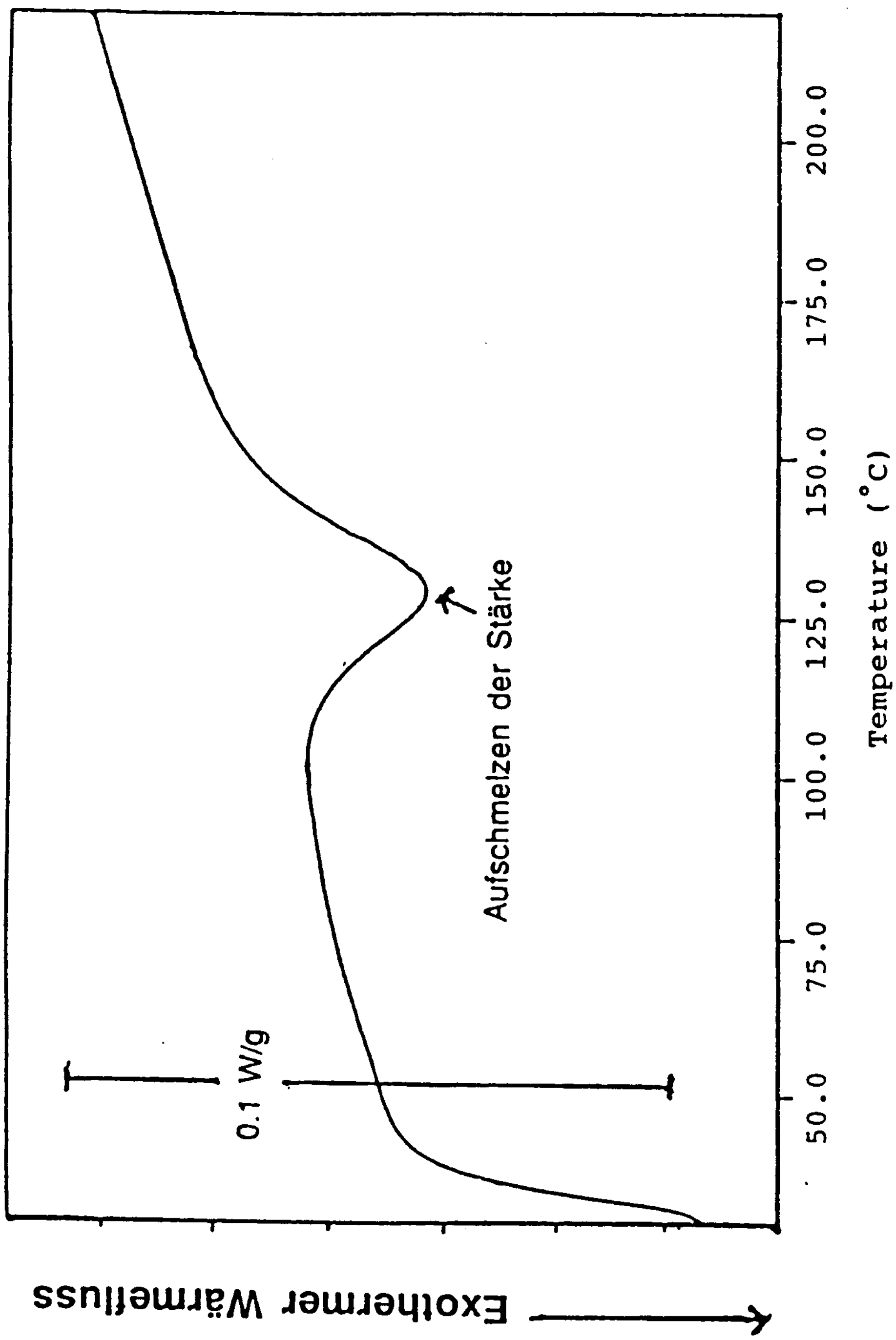

Exothermer Wärmefluss
Temperature (°C)
50.0
75.0
100.0
125.0
150.0
175.0
200.0
0.1 W/g
Aufschmelzen der Stärke

Figur 3

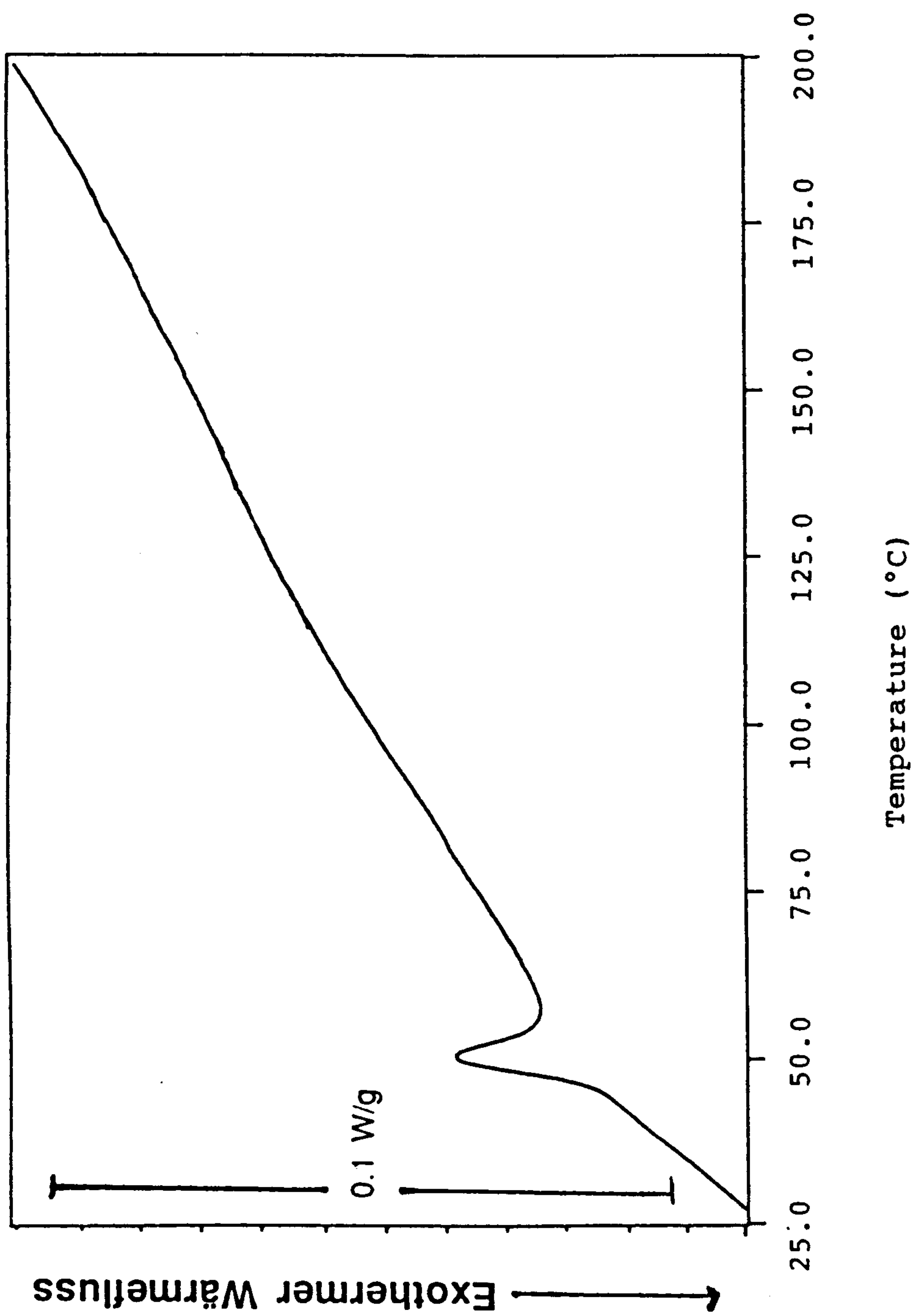
0.1 W/g
25.0
50.0
75.0
100.0
125.0
150.0
175.0
200.0
Temperature (°C)
Exothermer Wärmefluss

Figur 4

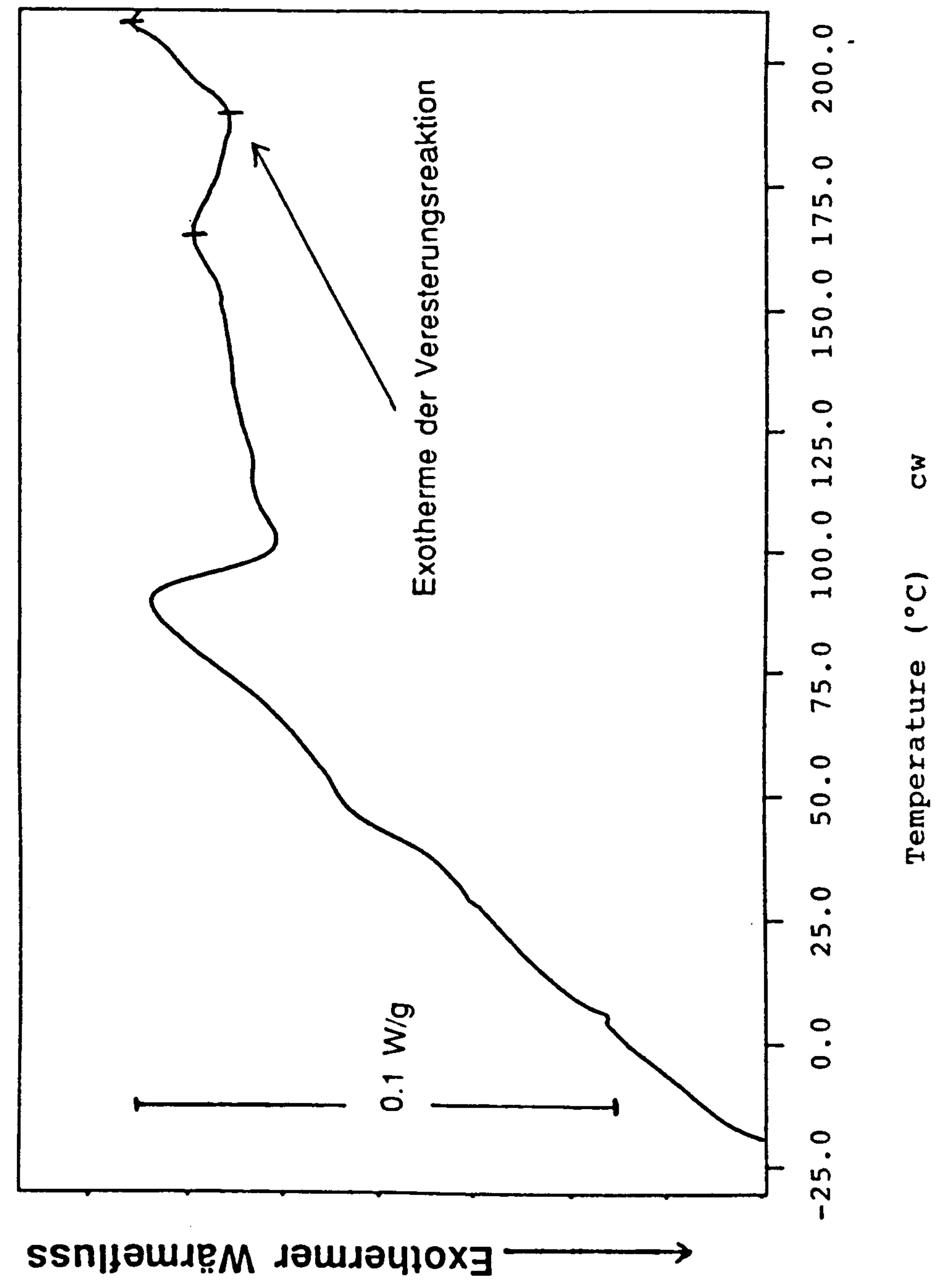
Exotherme der Veresterungsreaktion
0.1 W/g
-25.0
0.0
25.0
50.0
75.0
100.0
125.0
150.0
175.0
200.0
Temperature (°C)
cw
Exothermer Wärmefluss

Figur 5

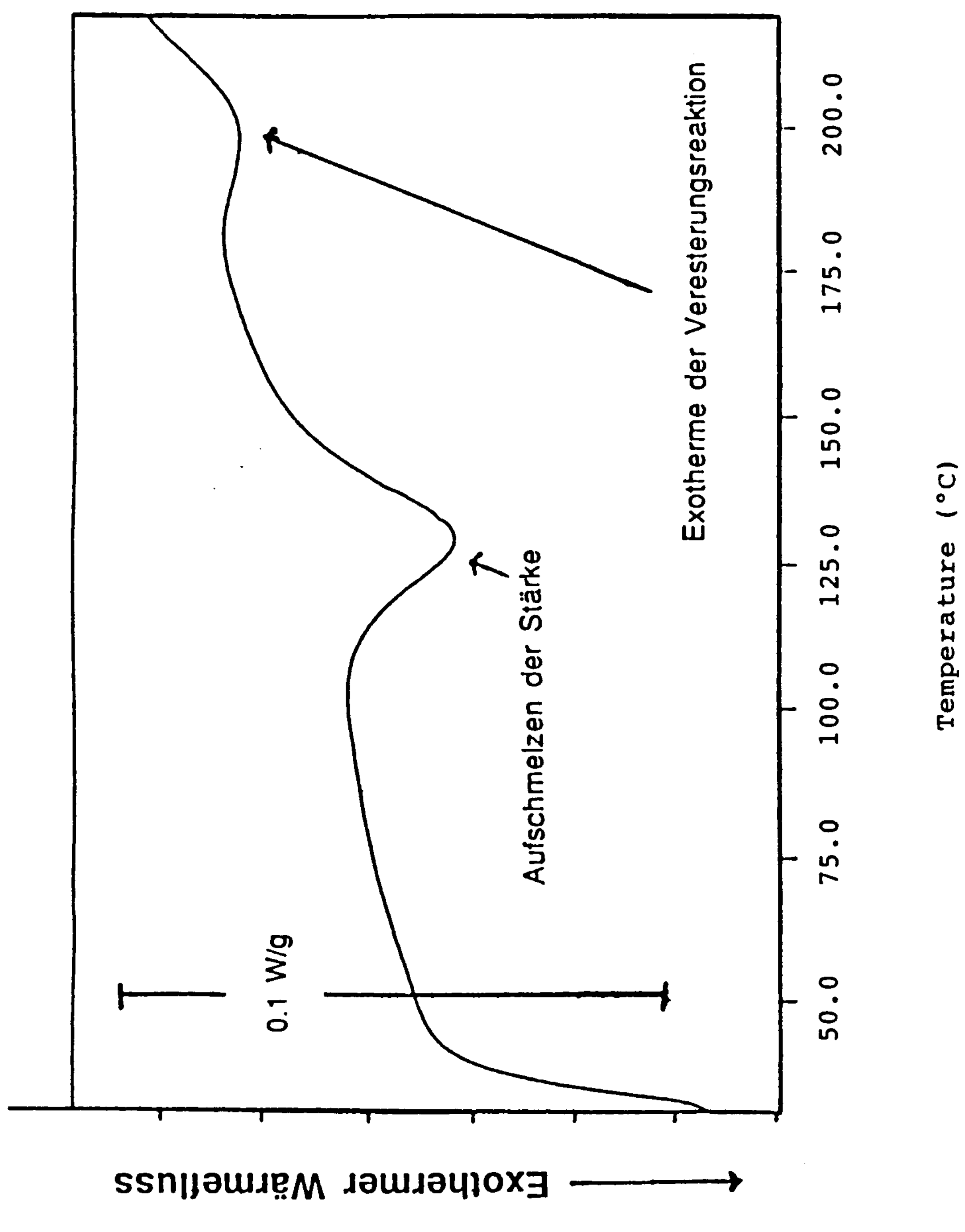
Exotherme der Veresterungsreaktion
Aufschmelzen der Stärke
0.1 W/g
50.0
75.0
100.0
125.0
150.0
175.0
200.0
Temperature (°C)
Exothermer Wärmefluss